# EUROPÄISCHE PATENTSCHRIFT

(11) **EP 1 211 044 B1**
(45) Veröffentlichungstag und Bekanntmachung des Hinweises auf die Patenterteilung: **21.06.2006**
(21) Anmeldenummer: 01127780.3
(22) Anmeldetag: 22.11.2001
(51) Int. Cl.: B29C 45/52

(54) **Rückstromsperre**
Non-return valve
Blocage du reflux

(30) Priorität: 01.12.2000 DE 10059615
(43) Veröffentlichungstag der Anmeldung: 05.06.2002
(73) Patentinhaber: Battenfeld GmbH, D-58540 Meinerzhagen (DE)
(72) Erfinder: Holzschuh, Johann, 58540 Meinerzhagen (DE)

(56) Entgegenhaltungen:
- EP-A- 0 541 048
- EP-A- 1 106 325
- DE-A- 19 836 871

## Beschreibung

Die Erfindung betrifft eine Rückstromsperre, die am Ende einer Plastifizier- und Einspritzschnecke angeordnet ist, um den Fluß von Kunststoffschmelze vom Bereich der Schneckengänge der Plastifizier- und Einspritzschnecke zum Bereich des Schneckenvorraums eines Schneckenzylinders zu steuern, in dem sich die Plastifizier- und Einspritzschnecke befindet.

Weiterhin umfaßt die Erfindung ein Verfahren zum Betreiben der Rückstromsperre.

Gattungsgemäße Rückstromsperren sind im Stand der Technik hinlänglich bekannt. So beschreibt beispielsweise die **EP 1 106 325 A1** eine Rückstromsperre, bei der ein Außenteil translatorisch verschoben wird, um eine Schmelzeleitung abzusperren und die **EP 541 048 A1** eine automatisch schließende Rückstromsperre, wobei die Schmelzeleitung über einen Axialanschlag abgesperrt wird, wenn die Spitze translatorisch verschoben wird.

Die Aufgabe einer Rückstromsperre ist es, bei Rotation der Plastifizier-und Einspritzschnecke die vom Materialtrichter über die Schnecke mit ihren Schneckengängen geförderte Kunststoffschmelze in den Schnekkenvorraum gelangen zu lassen und das Zurückfließen der Schmelze beim Einspritzen der Schmelze in das Spritzgießwerkzeug - durch translatorische Verschiebung der Schnecke - zu verhindern.

Es sind eine Vielzahl von Rückstromsperren für Spritzgießmaschinen bekannt, die durch eines ihrer Merkmale in zwei Ausführungsformen eingeteilt werden können; dieses Merkmal betrifft die Ausgestaltung des Außenteils der Rückstromsperre, das mit der Innenwand des Schneckenzylinders in Kontakt kommt:

Die erste Gruppe der Rückstromsperren hat ein nicht zwangsweise mitrotierendes Außenteil, das mit dem Grundkörper der Rückstromsperre nicht in Zwangsverbindung steht.

Die zweite Gruppe der Rückstromsperren hat ein zwangsweise rotierendes Außenteil, das mit dem Grundkörper der Rückstromsperre zwangsweise mitdreht, wie dies beispielsweise in der **DE 20 06 389** beschrieben wird.

Die der ersten Gruppe zuzurechnenden Rückstromsperren haben den Vorteil, daß zwischen der zylindrischen Mantelfläche des Außenteils und der Innenwand des Schneckenzylinders keine Relativbewegung bei der Schneckenrotation stattfindet. Nachteilhaft ist hier jedoch, daß an den sich berührenden Axialflächen eine hohe Flächenpressung zwischen dem rotierenden Teil (Grundkörper der Sperre) und dem nicht rotierenden Teil (Außenteil) auftritt, die zur Zerstörung der Rückstromsperre führen kann.

Die Rückstromsperren der zweiten Gruppe haben den Nachteil, daß zwischen der zylindrischen Mantelfläche des Außenteils und der Innenwand des Schneckenzylinders eine Relativbewegung bei Schneckendrehung auftritt und es dadurch zu Verschleiß kommt, der sowohl die Rückstromsperre als auch die Innenwand des Schneckenzylinders angreift. Vorteilhaft ist hingegen bei dieser Ausführungsform, daß Verschleiß der Axialflächen wegen der fehlenden Relativbewegung des Außenteils relativ zum Grundkörper der Rückstromsperre nicht auftritt.

Beiden Ausführungsformen ist gemeinsam, daß das Verhindern des Schmelzerückflusses durch eine axiale Verschiebung von Bauteilen - nämlich des Außenteils relativ zum Grundkörper der Rückstromsperre - durch die während des Beginns der Einspritzbewegung auf sie durch Überdruck wirkende Axialkraft bewerkstelligt wird und aufgrund der axial angeordneten Dichtflächen ein vollständiger Schmelzerückfluß erst bei Berührung der Dichtflächen und gleichzeitig wirkender hoher Anpreßkraft erfolgt.

Der Erfindung liegt im Lichte dieser vorbekannten Ausführungsformen von Rückstromsperren die **Aufgabe** zugrunde, eine Rückstromsperre zu schaffen, die mit einer minimalen Anzahl von Bauteilen auskommt und es ermöglicht, die jeweils vorteilhaften Eigenschaften der oben genannten beiden Gruppen von Rückstromsperren zu vereinigen. Gleichzeitig sollen das Auftreten der jeweils bekannten Nachteile der beiden Gruppen soweit wie möglich vermieden werden. Das Schließverhalten der Rückstromsperre soll schließlich verbessert werden, wobei es insbesondere möglich werden soll, ohne große Axialkräfte ein sicheres Schließen der Sperre zu bewerkstelligen und ein sanftes Schließen zu erreichen.

Die **Lösung** dieser Aufgabe durch die Erfindung ist, dass die Rückstromsperre (1) einen Grundkörper (6) aufweist, der mit der Plastifizier- und Einspritzschnecke (2) so verbunden ist, dass die Einspritzschnecke (2) am Ende einen Axialanschlag (16) aufweist und ein Außenteil (7), das relativ zum Grundkörper (6) zumindest translatorisch, vorzugsweise auch rotatorisch, beweglich ist, um in einer ersten Position (8) den Fluß von Kunststoffschmelze freizugeben und in einer zweiten Position (9) den Fluß von Kunststoffschmelze zu verhindern, wobei das Außenteil (7) mindestens zwei Schmelzeleitungen (10, 11) aufweist, die nicht miteinander in Verbindung stehen, und wobei der Grundkörper (6) mindestens eine Schmelzeleitung (12) aufweist, wobei über die mindestens zwei Schmelzeleitungen (10, 11) des Außenteils (7) zusammen mit der Schmelzeleitung (12) des Grundkörpers (6) eine fluidische Verbindung zwischen dem Bereich der Schneckengänge (3) und dem Bereich des Schneckenvorraums (4) bildbar ist und das Außenteil (7) eine Stirnfläche (19) aufweist, die parallel zum Axialanschlag (16) ausgeführt ist und mit diesem zusammenwirkt, wobei das Außenteil (7) eine Stirnfläche (19) aufweist die parallel zu dem kegelförmigen Axialanschlag (16), oder parallel zu dem als Kugeloberfläche ausgeführten Axialanschlag (16) angeordnet ist.

Erfindungsgemäß ist also vorgesehen, daß das Außenteil der Rückstromsperre zusammen mit dem Grundkörper der Sperre - bei entsprechender relativer Position von Außenteil und Grundkörper zueinander - einen Schmelzefließweg bilden können, der jedoch bei Verschiebung dieser beiden Teile zueinander unterbrochen werden kann. Die Ausführung der beiden Teile an einer ihren zueinander wirkenden Stirnseiten sorgt für eine zusätzliche Absperrung der fluidischen Verbindung.

Weiterbildungsgemäß ist vorgesehen, daß das Außenteil (7) in der Spitze (14) mitgenommen wird. Die Führung des Außenteils in der Spitze bewirkt ein zwangsläufiges Mitdrehen des Außenteils, wodurch der Verschleiß an den Kontaktflächen zwischen Außenteil und der Mantelfläche des Grundkörpers stark verringert wird, da hier nur noch eine Längsverschiebung stattfindet.

Fortbildungsgemäß ist vorgesehen, daß die Schmelzeleitungen (10, 11) im Außenteil (7) durch Bohrungen gebildet werden. Dabei können jeweils mehrere Bohrungen (10, 11) über den Umfang des Außenteils (7) angeordnet sein. Die Bohrungen (10, 11) sind dabei bevorzugt äquidistant über den Umfang des Außenteils (7) angeordnet. Des weiteren kann aus rheologischen Gründen bevorzugt vorgesehen sein, daß der Winkel (α) zwischen der Achse der Bohrungen (10, 11) und der Rotationsachse der Plastifizier- und Einspritzschnecke (2) zwischen 30° und 90° liegt, vorzugsweise bei 45°.

Die Schmelzeleitung (12) des Grundkörpers (6) können als Ausnehmung in der Umfangsfläche des Grundkörpers (6) ausgebildet sein.

Eine besonders strömungsgünstige Ausgestaltung wird erreicht, wenn der Axialanschlag (16) als Kegelmantelfläche oder Teil einer Kugeloberfläche unter einem Winkel zwischen 90° und 30°, vorzugsweise zwischen 60° und 45° ausgeführt ist. Die der Schnecke zugeordnete Axialfläche kann Bestandteil der Schnecke sein oder durch eine separate Zwischenscheibe gebildet werden.

Auch die vorgeschlagene Rückstromsperre kommt nicht ohne Relativbewegungen zwischen Bauteilen aus. Daher ist vorgesehen, daß der Au-ßenumfang des Außenteils (7) mit einer verschleißarmen Schicht versehen, insbesondere beschichtet, ist. Das gleiche gilt für den Innenumfang des Außenteils (7). Des weiteren kann vorgesehen werden, daß die Anlageflächen des Grundkörpers (6), an denen das Außenteil (7) anliegen kann, mit einer verschleißarmen Schicht versehen, insbesondere beschichtet, ist.

Gemäß einer bevorzugten Ausführungsform ist vorgesehen, daß der Grundkörper (6) eine Spitze (14) aufweist, wobei Grundkörper (6) und Spitze (14) einstückig oder miteinander verschraubt ausgebildet sind. Weiterhin kann der Grundkörper (6) mit der Plastifizier- und Einspritzschnecke (2) fest verschraubt oder unlösbar verbunden sein. Schließlich kann das Außenteil (7) eine im wesentlichen hohlzylindrische Form aufweisen und dessen Axialanschlag (16) z.B. kegelförmig oder als Kugeloberfläche ausgeführt sein.

Das lösungsgemäße Verfahren ist in Verbindung mit dem Oberbegriff des Anspruches 14 dadurch gekennzeichnet, daß in der ersten Position (8) die fluidische Verbindung zwischen dem Bereich der Schneckengänge (3) und dem Bereich des Schneckenvorraums (4) über mindestens zwei Schmelzeleitungen (10, 11) im Außenteil (7) in Verbindung mit einer Schmelzeleitung (12) im Grundkörper (6) freigegeben ist und in der zweiten Position (9) diese fluidische Verbindung zwischen dem Bereich der Schneckengänge (3) und dem Bereich des Schneckenvorraums (4) durch translatorische Verschiebung des Außenteils (7) unterbrochen ist, wobei in der zweiten Position (9) das Außenteil (7) mit der Stirnfläche (19) am Anschlag (16) anliegt, um eine weitere Absperrung der fluidischen Verbindung über einen kegelförmigen Axialanschlag zu bilden.

Fortbildungsgemäß ist vorgesehen, daß die weitere Absperrung der fluidischen Verbindung, die über den Anschlag (16) in Verbindung mit der Stirnfläche (19) gebildet wird, zeitlich nach der Absperrung der fluidischen Verbindung über die zwei Schmelzeleitungen (10, 11) erfolgt.

Mit der erfindungsgemäßen Ausgestaltung werden verschiedene Vorteile erreicht:
- Die Rückstromsperre kommt mit einer minimalen Zahl von Bauteilen aus. Die Sperre ist entsprechend kostengünstig herzustellen.
- Es treten geringe Gleitgeschwindigkeiten zwischen den sich berührenden Teilen auf, wodurch die Rückstromsperre entsprechend verschleißarm ist.
- Schließlich und vor allem ist ein sanftes und stetiges Schließen der Rückstromsperre erreichbar.

In der Zeichnung ist ein Ausführungsbeispiel der erfindungsgemäßen Rückstromsperre dargestellt.
- Fig. 1: zeigt schematisch den Schnitt durch einen Schneckenzylinder samt Plastifizier- und Einspritzschnecke und Rückstromsperre, und
- Fig. 2: eine Seitenansicht auf die Spitze der Schnecke.

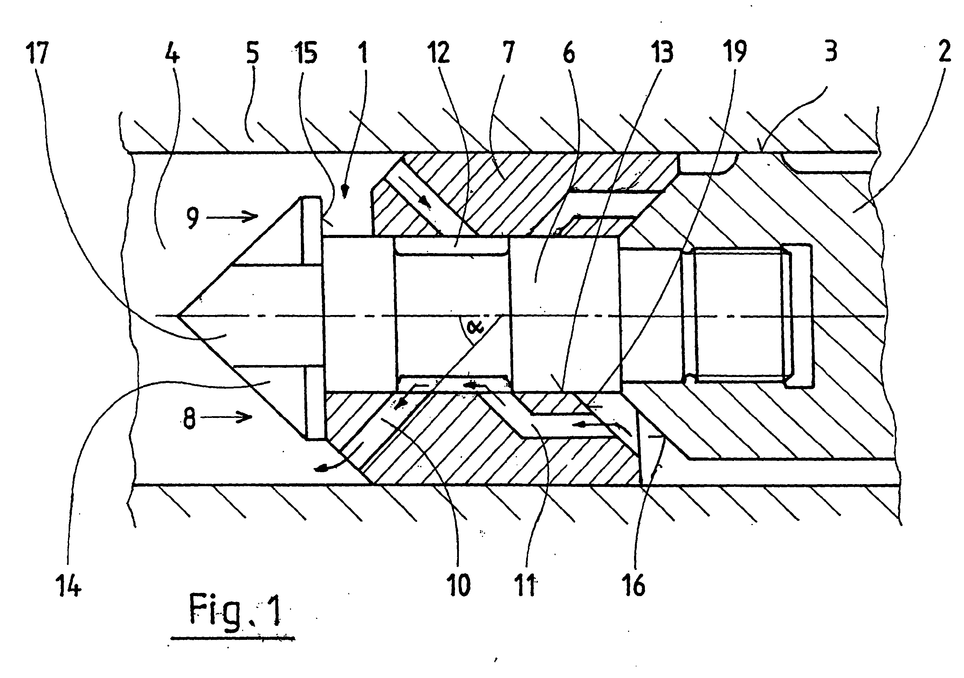

Figur 1 zeigt einen Schneckenzylinder 5, in dem eine Plastifizier- und Einspritzschnecke 2 drehbeweglich und verschiebbar angeordnet ist. Beim Rotieren der Schnecke 2 wird nicht dargestelltes plastifiziertes Kunststoffmaterial durch Schneckengänge 3 sowie "nach links" in den Bereich des Schneckenvorraums 4 gefördert.

Eine Rückstromsperre 1 ist am Ende der Schnecke 2 angeschraubt. Sie hat eine Spitze 14 und einen Grundkörper 6; Spitze 14 und Grundkörper 6 sind einstückig ausgeführt und mittels einer Schraubverbindung an der Schnecke 2 fixiert.

Zur Steuerung des Schmelzestroms ist auf dem Grundkörper 6 der Sperre 1 ein Außenteil 7 angeordnet. Während der Grundkörper 6 über seinen wesentlichen Bereich als zylindrisches Teil ausgeführt ist, umgibt das Außenteil 7 als hohlzylindrisches Bauteil den Grundkörper 6.

In der unteren Hälfte der Figur 1 ist eine erste Position 8 des Außenteils 7 relativ zum Grundkörper 6 skizziert, in der die Rückstromsperre geöffnet ist, in der also Schmelze "nach links" transportiert werden kann. In der oberen Bildhälfte ist indes eine zweite Position 9 dargestellt, in der das Außenteil 7 relativ zum Grundkörper 6 so angeordnet ist, daß die Sperre geschlossen ist, also keine Schmelze - weder von "rechts" nach "links" in den Schneckenvorraum 4 strömen kann noch umgekehrt. In der zweiten Position 9 kann also durch eine translatorische Verschiebung der Schnecke 2 "nach links" Schmelze aus dem Vorraum 4 in das nicht dargestellte Spritzgießwerkzeug eingespritzt werden. Durch die Ausgestaltung der Stirnfläche 19, die exakt mit der Kontur des Axialanschlages 16 korrespondiert, wird eine zusätzliche Ansperrung des Schmelzestromes erreicht.

In das Außenteil 7 sind zwei Gruppen von Schmelzeleitungen 10 und 11 eingebracht. Diese Leitungen sind als Bohrungen ausgebildet, die jeweils unter einem definierten Winkel α angeordnet sind. Dieser Winkel beträgt zwischen 30° und 90°, bevorzugt ca. 45°.

Gleichermaßen ist in den Außenumfang des zylindrischen Teils des Grundkörpers 6 eine Schmelzeleitung 12 in Form einer Ausnehmung eingearbeitet. Die Ausnehmung ist dabei bevorzugt als rotationssymmetrisch umlaufende Eindrehung ausgeführt.

Wie aus der unteren Bildhälfte zu entnehmen ist, liegt in der geöffneten Stellung 8 der Rückstromsperre 1 das Außenteil 7 am Axialanschlag 15 an der Spitze 14 an. Die Schmelzeleitungen 10, 11 und 12 sind dabei so positioniert, daß sich in dieser Position eine fluidische Verbindung zwischen dem Bereich der Schneckengänge 3 und dem Schneckenvorraum 4 ergibt; in Figur 1 ist dies durch die Pfeile in der unteren Bildhälfte dargestellt.

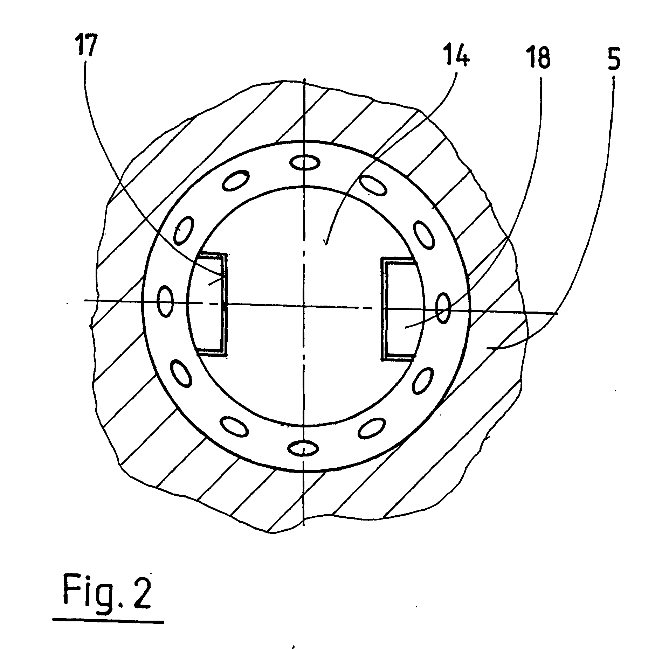

Wird das Außenteil 7 indes durch die translatorische Verschiebebewegung der Schnecke 2 "nach links" an den rechten, als Kegelfläche ausgebildeten Axialanschlag 16 bewegt, ist die fluidische Verbindung unterbrochen; die Rückstromsperre ist geschlossen. Der Schmelzerückfluß vom Bereich des Schneckenvorraums 4 zurück in den Bereich der Schneckengänge 3 wird dabei bereits während der Axialverschiebung des Außenteils gestoppt. Der Übergang von der Offenstellung in die Sperrstellung erfolgt allmählich entlang der zylindrischen Berührungsflächen von Grundkörper 6 und Außenteil 7, die als Dichtflächen wirken; diese Dichtwirkung ist unabhängig von der auf das Außenteil 7 wirkenden Axialkraft. Die Führung des Außenteils 7 erfolgt über die Aussparungen 17 in der Spitze 14. Die Stege 18 des Außenteils 7 sind der Kontur der Aussparungen 17 angepaßt, wie dies in Figur 2 gezeigt wird, und weisen eine Länge auf, die größer als der Verschiebeweg des Außenteils 7 ist, damit diese immer in den Aussparungen 17 im Eingriff sind.

### Bezugszeichenliste:

- 1: Rückstromsperre
- 2: Plastifizier- und Einspritzschnecke
- 3: Bereich der Schneckengänge
- 4: Bereich des Schneckenvorraums
- 5: Schneckenzylinder
- 6: Grundkörper der Rückstromsperre
- 7: Außenteil der Rückstromsperre
- 8: erste Position (Geöffnet-Position)
- 9: zweite Position (Geschlossen-Position)
- 10, 11: Schmelzeleitungen im Außenteil
- 12: Schmelzeleitung im Grundkörper
- 10: Absperrbereich des Grundkörpers
- 11: Spitze
- 12: Axialanschlag an der Spitze
- 13: Axialanschlag an der Schnecke
- 14: Aussparung in Spitze 14
- 15: Stege an Außenteil 7
- 16: Stirnfläche des Außenteils 7

- α: Winkel zwischen der Achse der Bohrungen und der Rotationsachse der Schnecke

## Patentansprüche

1. Rückstromsperre (1), die zur Steuerung des Flusses von Kunststoffschmelze am Ende einer Plastifizier- und Einspritzschnekke (2) angeordnet ist, um den Fluß von Kunststoffschmelze vom Bereich der Schneckengänge (3) der Plastifizier- und Einspritzschnecke (2) zum Bereich des Schneckenvorraums (4) eines Schneckenzylinders (5) zu steuern, in dem sich die Plastifizier-und Einspritzschnecke (2) befindet,
wobei die Rückstromsperre (1) einen Grundkörper (6) aufweist, der mit der Plastifizier- und Einspritzschnecke (2) so verbunden ist, dass die Einspritzschnecke (2) am Ende einen Axialanschlag (16) aufweist und
ein Außenteil (7), das relativ zum Grundkörper (6) zumindest translatorisch, vorzugsweise auch rotatorisch, beweglich ist, um in einer ersten Position (8) den Fluß von Kunststoffschmelze freizugeben und in einer zweiten Position (9) den Fluß von Kunststoffschmelze zu verhindern,
wobei das Außenteil (7) mindestens zwei Schmelzeleitungen (10, 11) aufweist, die nicht miteinander in Verbindung stehen, und
wobei der Grundkörper (6) mindestens eine Schmelzeleitung (12) aufweist,
wobei über die mindestens zwei Schmelzeleitungen (10, 11) des Außenteils (7) zusammen mit der Schmelzeleitung (12) des Grundkörpers (6) eine fluidische Verbindung zwischen dem Bereich der Schneckengänge (3) und dem Bereich des Schneckenvorraums (4) absperrbar ist und
das Außenteil (7) eine Stirnfläche (19) aufweist, die parallel zu einem, am Ende der Plastifizier- und Einspritzschnecke (2) kugel- oder kegelförmig ausgeführten Axialanschlag (16) angeordnet ist und mit diesem zusammenwirkt, um eine weitere Absperrung der fluidischen Verbindung zu bilden.

2. Rückstromsperre nach Anspruch 1, **dadurch gekennzeichnet, daß** das Außenteil (7) in der Spitze (14) mitgenommen wird.

3. Rückstromsperre nach Anspruch 2, **dadurch gekennzeichnet, daß** die Schmelzeleitungen (10, 11) im Außenteil (7) durch Bohrungen gebildet werden.

4. Rückstromsperre nach Anspruch 3, **dadurch gekennzeichnet, daß** über den Umfang des Außenteils (7) jeweils mehrere Bohrungen (10, 11) angeordnet sind.

5. Rückstromsperre nach Anspruch 4, **dadurch gekennzeichnet, daß** die Bohrungen (10, 11) äquidistant über den Umfang des Außenteils (7) angeordnet sind.

6. Rückstromsperre nach einem der Ansprüche 2 bis 5, **dadurch gekennzeichnet, daß** der Winkel (α) zwischen der Achse der Bohrungen (10, 11) und der Rotationsachse der Plastifizier- und Einspritzschnecke (2) zwischen 30° und 90° liegt, vorzugsweise bei 45°.

7. Rückstromsperre nach einem der Ansprüche 1 bis 6, **dadurch gekennzeichnet, daß** die Schmelzeleitung (12) des Grundkörpers (6) als Ausnehmung in der Umfangsfläche des Grundkörpers (6) ausgebildet ist.

8. Rückstromsperre nach einem der Ansprüche 1 bis 7, **dadurch gekennzeichnet, daß** der Außenumfang des Außenteils (7) mit einer verschleißarmen Schicht versehen, insbesondere beschichtet, ist.

9. Rückstromsperre nach einem der Ansprüche 1 bis 7, **dadurch gekennzeichnet, daß** der Innenumfang des Außenteils (7) mit einer verschleißarmen Schicht versehen, insbesondere beschichtet, ist.

10. Rückstromsperre nach einem der Ansprüche 1 bis 7, **dadurch gekennzeichnet, daß** die Anlageflächen des Grundkörpers (6), an denen das Außenteil (7) anliegen kann, mit einer verschleißarmen Schicht versehen, insbesondere beschichtet, sind.

11. Rückstromsperre nach einem der Ansprüche 1 bis 10, **dadurch gekennzeichnet, daß** der Grundkörper (6) eine Spitze (14) aufweist,
wobei Grundkörper (6) und Spitze (14) einstückig oder miteinander verschraubt ausgebildet sind.

12. Rückstromsperre nach Anspruch 11, **dadurch gekennzeichnet, daß** der Grundkörper (6) mit der Plastifizier- und Einspritzschnecke (2) fest verschraubt oder unlösbar verbunden ist.

13. Rückstromsperre nach einem der Ansprüche 1 bis 12, **dadurch gekennzeichnet, daß** das Außenteil (7) eine im wesentlichen hohlzylindrische Form aufweist.

14. Verfahren zum Betreiben einer Rückstromsperre (1), die zur Steuerung des Flusses von Kunststoffschmelze am Ende einer Plastifizier- und Einspritzschnecke (2) angeordnet ist,
wobei der Fluß von Kunststoffschmelze vom Bereich der Schnekkengänge (3) der Plastifizier- und Einspritzschnecke (2) zum Bereich des Schneckenvorraums (4) eines Schneckenzylinders (5) gesteuert wird, wobei
die Rückstromsperre (1) einen, am Ende der Plastifizier-und Einspritzschnecke (2) angebrachten Grundkörper (6) und einen Außenteil (7) aufweist,
wobei das Außenteil (7) der Rückstromsperre (1) relativ zum Grundkörper (6) zumindest translatorisch, vorzugsweise auch rotatorisch, beweglich ist, um in einer ersten Position (8) den Fluß von Kunststoffschmelze freizugeben und in einer zweiten Position (9) den Fluß von Kunststoffschmelze zu verhindern, wobei
in der ersten Position (8) die fluidische Verbindung zwischen dem Bereich der Schneckengänge (3) und dem Bereich des Schneckenvorraums (4) über mindestens zwei Schmelzeleitungen (10,11) im Außenteil (7) in Verbindung mit einer Schmelzeleitung (12) im Grundkörper (6) freigegeben ist und
in der zweiten Position (9) diese fluidische Verbindung zwischen dem Bereich der Schneckengänge (3) und dem Bereich des Schneckenvorraums (4) durch translatorische Verschiebung des Außenteils (7) unterbrochen ist,
wobei in der zweiten Position (9) das Außenteil (7) mit einer Stirnfläche (19) an einem, am Ende der Plastifizier- und Einspritzschnecke (2) kegel- oder kugelförmig ausgeführten Axialanschlag (16) anliegt, um eine weitere Absperrung der fluidischen Verbindung über den kegel- oder kugelförmigen Axialanschlag zu bilden.

15. Verfahren nach Anspruch 16, **dadurch gekennzeichnet, daß** die weitere Absperrung der fluidischen Verbindung, die über den Anschlag (16) in Verbindung mit der Stirnfläche (19) gebildet wird, zeitlich nach der Absperrung der fluidischen Verbindung über die zwei Schmelzeleitungen (10, 11) erfolgt.

## Claims

1. Non-return valve (1) which, to control the flow of plastic melt, is arranged at the end of a plastifying and injection screw (2) in order to control the flow of plastic melt from the region of the screw threads (3) of the plastifying and injection screw (2) to the region of the screw antechamber (4) of a screw cylinder (5), in which the plastifying and injection screw (2) is situated, wherein the non-return valve (1) has a base body (6) which is connected to the plastifying and injection screw (2) so that the injection screw (2) has an axial stop (16) at the end and an outer part (7), which can be moved relative to the base body (6) at least translationally, preferably also rotationally, in order to release the flow of plastic melt in a first position (8) and to prevent the flow of plastic melt in a second position (9), wherein the outer part (7) has at least two melt pipes (10, 11) which are not connected to one another, and wherein the base body (6) has at least one melt pipe (12), wherein a fluid connection between the region of the screw threads (3) and the region of the screw antechamber (4) can be closed via the at least two melt pipes (10, 11) of the outer part (7) together with the melt pipe (12) of the base body (6), and the outer part (7) has an end face (19), which is arranged parallel to an axial stop (16) designed like a sphere or cone at the end of the plastifying and injection screw (2) and cooperates with the latter in order to form a further closure to the fluid connection.

2. Non-return valve according to claim 1, **characterised in that** the outer part (7) is also carried in the tip (14).

3. Non-return valve according to claim 2, **characterised in that** the melt pipes (10, 11) in the outer part (7) are formed by bores.

4. Non-return valve according to claim 3, **characterised in that** in each case several bores (10, 11) are arranged over the periphery of the outer part (7).

5. Non-return valve according to claim 4, **characterised in that** the bores (10, 11) are arranged equidistantly over the periphery of the outer part (7).

6. Non-return valve according to one of claims 2 to 5, **characterised in that** the angle (α) between the axis of the bores (10, 11) and the axis of rotation of the plastifying and injection screw (2) lies between 30° and 90°, preferably at 45°.

7. Non-return valve according to one of claims 1 to 6, **characterised in that** the melt pipe (12) of the base body (6) is designed as a recess in the peripheral surface of the base body (6).

8. Non-return valve according to one of claims 1 to 7, **characterised in that** the outer periphery of the outer part (7) is provided, in particular coated, with a low-wear layer.

9. Non-return valve according to one of claims 1 to 7, **characterised in that** the inner periphery of the outer part (7) is provided, in particular coated, with a low-wear layer.

10. Non-return valve according to one of claims 1 to 7, **characterised in that** the contact surfaces of the base body (6), on which the outer part (7) may rest, are provided, in particular coated, with a low-wear layer.

11. Non-return valve according to one of claims 1 to 10, **characterised in that** the base body (6) has a tip (14), wherein base body (6) and tip (14) are designed in one piece or screwed to one another.

12. Non-return valve according to claim 11, **characterised in that** the base body (6) is firmly screwed or non-releasably connected to the plastifying and injection screw (2).

13. Non-return valve according to one of claims 1 to 12, **characterised in that** the outer part (7) has an essentially hollow cylindrical shape.

14. Process for operating a non-return valve (1) which, to control the flow of plastic melt, is arranged at the end of a plastifying and injection screw (2), wherein the flow of plastic melt from the region of screw threads (3) of the plastifying and injection screw (2) to the region of the screw antechamber (4) of a screw cylinder (5) is controlled, wherein the non-return valve (1) has a base body (6) which is attached to the end of the plastifying and injection screw (2) and an outer part (7), wherein the outer part (7) of the non-return valve (1) can be moved relative to the base body (6) at least translationally, preferably also rotationally, in order to release the flow of plastic melt in a first position (8) and to prevent the flow of plastic melt in a second position (9), wherein in the first position (8), the fluid connection between the region of the screw threads (3) and the region of the screw antechamber (4) is released via at least two melt pipes (10, 11) in the outer part (7) in conjunction with a melt pipe (12) in the base body (6) and in the second position (9), this fluid connection between the region of the screw threads (3) and the region of the screw antechamber (4) is interrupted by translational displacement of the outer part (7), wherein in the second position (9), the outer part (7) with an end face (19) rests against an axial stop (16) designed like a cone or sphere at the end of the plastifying and injection screw (2) in order to form a further closure to the fluid connection via the cone-like or sphere-like axial stop.

15. Process according to claim 16, **characterised in that** the further closure to the fluid connection, which is formed via the stop (16) in conjunction with the end face (19), is effected temporally after closure of the fluid connection via the two melt pipes (10, 11).

## Revendications

1. Dispositif anti-retour (1) disposé pour le contrôle du flux de matière plastique fondue à l'extrémité d'une vis sans fin de plastification et d'injection (2) pour piloter le flux de matière plastique fondue de la zone des spires (3) de la vis sans fin de plastification et d'injection (2) vers la zone antérieure à la vis sans fin (4) d'un cylindre à vis sans fin (5) dans lequel se trouve la vis sans fin de plastification et d'injection (2),
le dispositif anti-retour (1) comportant un corps de base (6) qui est relié à la vis sans fin de plastification et d'injection (2), de façon à ce que sur son extrémité, la vis sans fin d'injection (2) comporte une butée axiale (16) et
une partie extérieure (7), qui par rapport au corps de base (6) est mobile au moins en translation, de préférence aussi en rotation, pour libérer le flux de matière plastique fondue dans une première position (8) et pour empêcher le flux de matière plastique fondue dans une deuxième position (9),
la partie extérieure (7) comportant au moins deux conduits à matière fondue (10, 11) qui ne sont pas reliés entre eux, et
le corps de base (6) comportant au moins un conduit à matière fondue (12),
une liaison par fluide entre la zone des spires de la vis sans fin (3) et la zone antérieure à la vis sans fin (4) pouvant être bloquée par l'intermédiaire d'au moins les deux conduits à matière fondue (10, 11) de la partie extérieure (7), en association avec le conduit à matière fondue (12) du corps de base (6) et
la partie extérieure (7) comportant une surface frontale (19) qui est disposée à la parallèle d'une butée axiale (16) conçue sous forme sphérique ou conique sur l'extrémité de la vis sans fin de plastification et d'injection (2) et coopérant avec cette dernière, pour créer un blocage supplémentaire de la liaison par fluide.

2. Dispositif anti-retour selon la revendication 1, **caractérisé en ce que** la partie extérieure (7) est entraîné dans la pointe (14).

3. Dispositif anti-retour selon la revendication 2, **caractérisé en ce que** les conduits à matière fondue (10, 11) dans la partie extérieure (7) sont formés par des perçages.

4. Dispositif anti-retour selon la revendication 3, **caractérisé en ce que** respectivement plusieurs perçages (10, 11) sont disposés sur la périphérie de la partie extérieure (7).

5. Dispositif anti-retour selon la revendication 4, **caractérisé en ce que** les perçages (10, 11) sont disposés de façon équidistante sur la périphérie de la partie extérieure (7).

6. Dispositif anti-retour selon l'une quelconque des revendications 2 à 5, **caractérisé en ce que** l'angle (α) entre l'axe des perçages (10, 11) et l'axe de rotation de la vis sans fin de plastification et d'injection (2) se situe entre 30° et 90°, de préférence à 45°.

7. Dispositif anti-retour selon l'une quelconque des revendications 1 à 6, **caractérisé en ce que** le conduit à matière fondue (12) du corps de base (6) est conçu sous la forme d'un évidement dans la surface périphérique du corps de base (6).

8. Dispositif anti-retour selon l'une quelconque des revendications 1 à 7, **caractérisé en ce que** la périphérie extérieure de la partie extérieure (7) est munie, notamment revêtue, d'une couche à faible usure.

9. Dispositif anti-retour selon l'une quelconque des revendications 1 à 7, **caractérisé en ce que** la périphérie intérieure de la partie extérieure (7) est munie, notamment revêtue, d'une couche à faible usure.

10. Dispositif anti-retour selon l'une quelconque des revendications 1 à 7, **caractérisé en ce que** les surfaces d'appui du corps de base (6) sur lesquelles la partie extérieure (7) peut s'appuyer sont munies, notamment revêtues, d'une couche à faible usure.

11. Dispositif anti-retour selon l'une quelconque des revendications 1 à 10, **caractérisé en ce que** le corps de base (6) comporte une pointe (14), le corps de base (6) et la pointe (14) étant conçus en monobloc ou vissés l'un sur l'autre.

12. Dispositif anti-retour selon la revendication 11, **caractérisé en ce que** le corps de base (6) est fixement vissé sur la vis sans fin de plastification et d'injection (2) ou relié à cette dernière de façon inamovible.

13. Dispositif anti-retour selon l'une quelconque des revendications 1 à 12, **caractérisé en ce que** la partie extérieure (7) est sensiblement en forme de cylindre creux.

14. Procédé de maniement d'un dispositif anti-retour (1) qui est disposé pour le contrôle du flux de matière plastique fondue à l'extrémité d'une vis sans fin de plastification et d'injection (2),
le flux de matière plastique fondue étant piloté de la zone des spires (3) de la vis sans fin de plastification et d'injection (2) vers la zone antérieure à la vis sans fin (4) d'un cylindre à vis sans fin (5),
le dispositif anti-retour (1) comportant un corps de base (6) monté sur l'extrémité de la vis sans fin de plastification et d'injection (2) et une partie extérieure (7),
la partie extérieure (7) du dispositif anti-retour (1) étant mobile par rapport au corps de base (6) au moins en translation, de préférence aussi en rotation, pour libérer le flux de matière plastique fondue dans une première position (8) et pour empêcher le flux de matière plastique fondue dans une deuxième position (9),
dans la première position (8), la liaison par fluide entre la zone des spires de la vis sans fin (3) et la zone antérieure à la vis sans fin (4) étant libérée par l'intermédiaire d'au moins deux conduits à matière fondue (10, 11) dans la partie extérieure (7), en association avec un conduit à matière fondue (12) dans le corps de base (6) et,
dans la deuxième position (9), cette liaison par fluide entre la zone des spires de la vis sans fin (3) et la zone antérieure à la vis sans fin (4) étant interrompue par déplacement de la partie extérieure (7) en translation,
dans la deuxième position (9), la partie extérieure (7) s'appliquant par une surface frontale (19) sur une butée axiale (16) conçue sous forme conique ou sphérique sur l'extrémité de la vis sans fin de plastification et d'injection (2), pour créer un blocage supplémentaire de la liaison par fluide par l'intermédiaire de la butée axiale de forme conique ou sphérique.

15. Procédé selon la revendication 16, **caractérisé en ce que** le blocage supplémentaire de la liaison par fluide qui est crée par l'intermédiaire de la butée (16), en association avec la surface frontale (19), est assuré dans le temps après le blocage de la liaison par fluide par l'intermédiaire des deux conduits à matière fondue (10, 11).
